# EUROPEAN PATENT APPLICATION

(11) **EP 2 767 891 A2**
(43) Date of publication of application: **20.08.2014**
(21) Application number: 14152686.3
(22) Date of filing: 27.01.2014
(51) Int. Cl.: G06F 3/0485, G01C 23/00, G06F 3/0484

(54) **Slider control for graphical user interface and method for use thereof**

(30) Priority: 14.02.2013 US 201313767654
(71) Applicant: Honeywell International Inc., Morristown, NJ 07962-2245 (US)
(72) Inventor: Agrawal, Pulkit Kumar, Morristown, NJ 07962-2245 (US); Gurusamy, Saravanakumar, Morristown, NJ 07962-2245 (US)
(74) Representative: Houghton, Mark Phillip

(57) **Abstract**

A system and method are provided for varying a parameter graphically represented by a first control button on a display. The first control button is pressed either by contacting a touch screen or via a cursor control. Symbology is then generated on the display graphically representative of a slide control, which is dragged to vary the parameter to a desired value. Contact with the display, either by means of touch or cursor control, as the case may be, is then terminated.

## Description

### FIELD OF THE INVENTION

Embodiments disclosed herein relate generally to controls for graphical interfaces and, more particularly, to an intuitive slider control and the use thereof on a graphical user interface touch screen display interface

### BACKGROUND

While graphical user interfaces such as touch screen controllers are being introduced as components of modem flight deck instrumentation, they are constrained by problems associated with inadvertent touch, which may be defined as any system detectable touch issued to the touch sensors without the pilot's operational consent. That is, a pilot may activate touch screen control buttons inadvertently because of turbulence, vibrations, or aspects of the pilot's physical and cognitive workload, resulting in possible system malfunction or operational error. For example, potential sources of inadvertent touches include accidental brush by a pilot's hand or other physical object while the pilot is not interacting with the touch screen controller; e.g. touch resulting when moving across the flight deck or involuntary movements (jerks) induced by turbulence. Accidental activation may also be caused by a pilot's non-interacting fingers or hand portions. Furthermore, environmental factors may also result in inadvertent touching depending on the touch technology employed; e.g. electromagnetic interference in the case of capacitive technologies, or insects, sunlight, pens, clipboards, etc., in the case of optical technologies. Apart from the above described side effects associated with significant control functions, activation of even less significant control functions degrades the overall functionality of touch screen interfaces.

Currently, graphical user interfaces require three distinct clicks to change the value of a metric controlled by a slider control. As used herein, the term "click" may comprise (1) the act of bringing a finger, stylus, or the like into contact with a touch screen and subsequently removing the finger in the case of a touch screen controller, and (2) the downward and subsequent upward button movement on a non-touch-screen user interface; e.g. a cursor control button.

For example, three separate clicks are required to change display brightness from, for example, fifty to seventy. First, the operator must click on a "brightness" button to invoke the slider control. Second, the operator must click on the slider control, drag the brightness from fifty to seventy, and lift the finger off the slider control. Finally, the operator must click on the "close button" of the slider control to complete the operation. Thus, it should be apparent that if the display properties (e.g. the video properties such as brightness, contrast, saturation, etc.) have to be modified, a great deal of effort is required.

The amount of required effort can be reduced by providing individual slider controls for all parameters. However, a large amount of display area would be consumed. Furthermore, in a potentially turbulent environment, such as an aircraft in flight, the ability to click on the right button is substantially reduced. Thus, the requirement to perform the above described three-step procedure in an environment characterized by reduced accuracy increases the time it takes to perform a simple task.

In view of the foregoing, it would be desirable to provide a slider control system and method that reduces effort and occupies less real estate on a display; e.g. a screen controller display.

### BRIEF SUMMARY

This summary is provided to introduce a selection of concepts in a simplified form that are further described below in the detailed description. This summary is not intended to identify key or essential features of the claimed subject matter, nor is it intended to be used as an aid in determining the scope of the appended claims.

A method is provided for varying a parameter graphically represented by a first control button on a display. The method comprises pressing the display proximate the first button, generating symbology on the display graphically representative of a slide control, dragging the slide control to vary the parameter to a desired value; and releasing the slide control.

An aircraft display system is also provided and configured to display a slide control for enabling the adjustment of at least one parameter. The system comprises a display system, a user input device coupled to the display system, and a processor coupled to the display system and to the input device. The processor is configured to (1) display at least one control button, (2) generate symbology for the graphical display of a slide control when the control button is engaged, (3) monitor and display movement of the slide control made by means of the user input device; and (4) terminate display of the slide control when a desired value of the parameter has been reached.

A method is also provided for varying a parameter graphically represented by a first control button amidst a plurality of control buttons. The method comprises engaging the display proximate the first control button via a user input device, generating symbology on the display graphically representative of a slide control, fading the remainder of the display when the slide control is displayed, dragging the slide control to adjust the parameter to a desired level, and disengaging from the display via the user input device.

### BRIEF DESCRIPTION OF THE DRAWINGS

A more complete understanding of the subject matter may be derived by referring to the detailed description and claims when considered in conjunction with the following figures, wherein like reference numerals refer to similar elements throughout the figures, and wherein:
FIG. 1 is a block diagram of an information display system suitable for us in an aircraft in an accordance with an embodiment;
FIG. 2 illustrates a representative pilot settings page on a display;
FIG. 3 illustrates a typical slide control for use in accordance with an exemplary embodiment;
FIGS. 4 and 5 are graphical representations of the slide control of FIG.3 superimposed on the display od FIG. 1 for adjusting respectively brightness and saturation in accordance with exemplary embodiments;

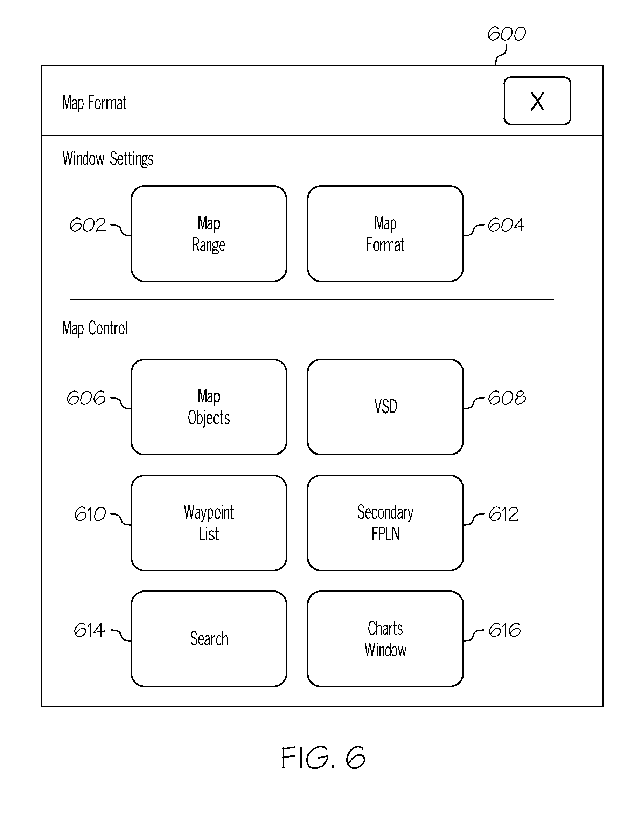

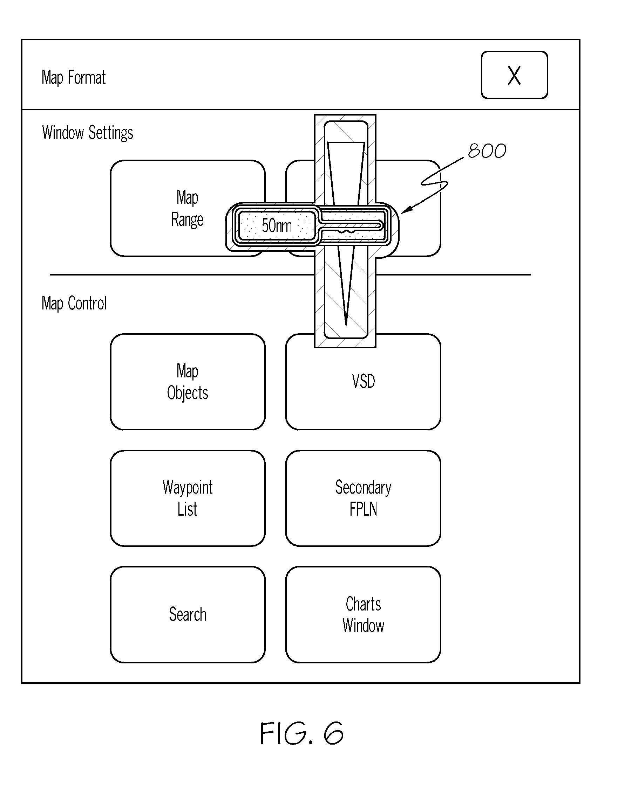

FIG. 6 is a representative map format page on a display;

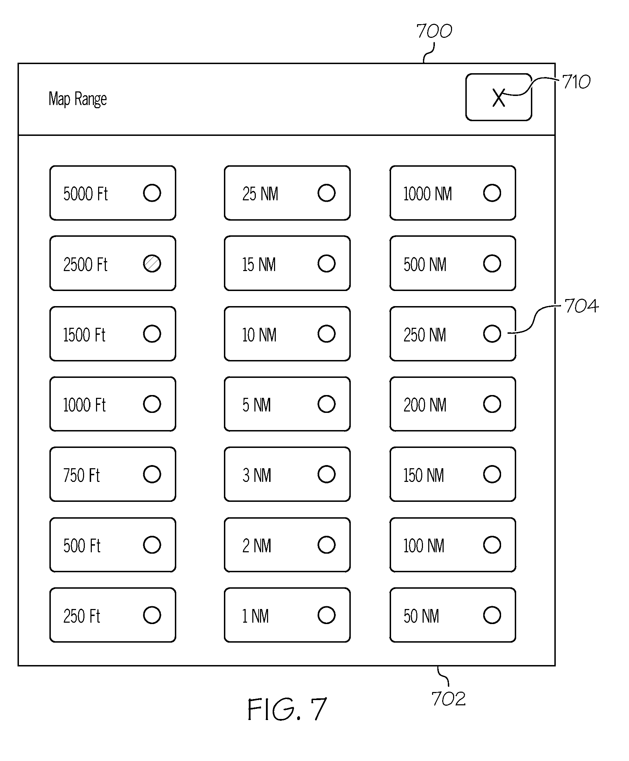

FIG.7 is a representative map range display that may be generated by activating the map range button on the display page shown in FIG. 6 in accordance with known techniques;
FIG. 8 is a graphical representation of the slide control of FIG. 1 superimposed on the map format page of FIG. 6 in accordance with an exemplary embodiment; and
FIG. 9 is a block diagram of a process for varying a parameter alterable by manipulation of a control button on a display in accordance with an exemplary embodiment.

### DETAILED DESCRIPTION

The following detailed description is merely exemplary in nature and is not intended to limit the invention or its application and uses. Furthermore, there is no intention to be bound by any theory presented in the preceding background or the following detailed description.

Though the method and touch screen of the exemplary embodiments may be used in any type of vehicle, for example, trains and heavy machinery, automobiles, trucks, and water craft, the use in an aircraft cockpit display system will be described as an example.

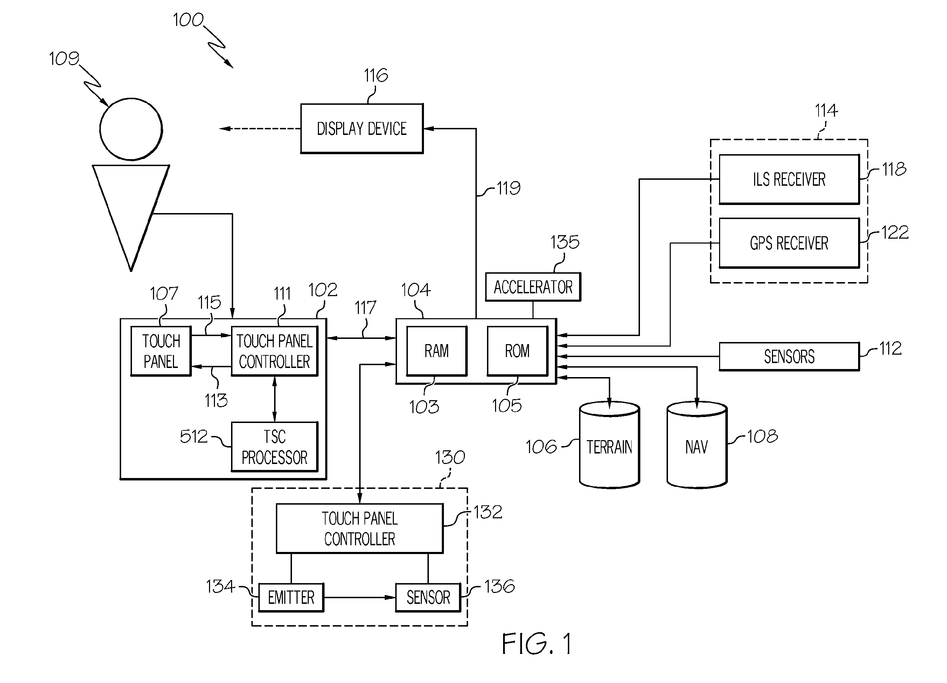

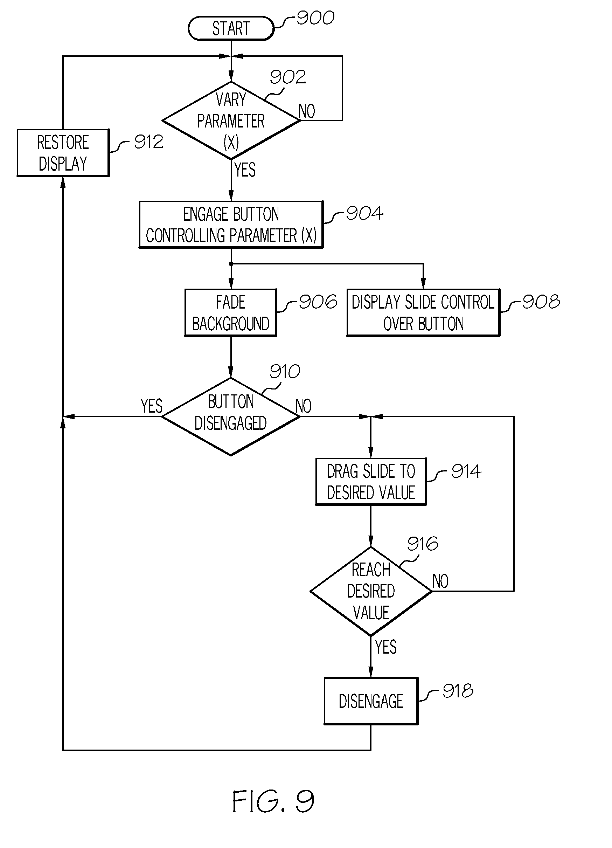

Referring to FIG. 1, a flight deck display system 100 includes a user interface 102, a processor 104, one or more terrain databases 106 sometimes referred to as a Terrain Avoidance and Warning System (TAWS), one or more navigation databases 108, sensors 112, external data sources 114, and one or more display devices 116. The user interface 102 is in operable communication with the processor 104 and is configured to receive input from a user 109 (e.g., a pilot) and, in response to the user input, supplies command signals to the processor 104. The user interface 102 may be any one, or combination, of various known user interface devices including, but not limited to, one or more buttons, switches, or knobs (not shown). In the depicted embodiment, the user interface 102 includes a touch screen display 107, a touch screen controller (TSC) 111, and a TSC processor 512 (discussed in connection with FIG. 9 hereinbelow). The TSC 111 provides drive signals 113 to a touch screen display 107, and a sense signal 115 is provided from the touch screen display 107 to the touch screen controller 111, which periodically provides a control signal 117 of the determination of a touch to the processor 104. The processor 104 interprets the controller signal 117, determines the application of the digit on the touch screen 107, and provides, for example, a controller signal 117 to the touch screen controller 111 and a signal 119 to the display device 116. Therefore, the user 109 uses the touch screen 107 to provide an input as more fully described hereinafter. Furthermore, the flight deck system 100 includes a gaze detecting system 130 comprising a gaze tracking controller 132 coupled between the processor 104 and each of an emitter 134 and a sensor 136, and in other exemplary embodiments, an accelerator 135.

The processor 104 may be implemented or realized with a general purpose processor, a content addressable memory, a digital signal processor, an application specific integrated circuit, a field programmable gate array, any suitable programmable logic device, discrete gate or transistor logic, discrete hardware components, or any combination designed to perform the functions described herein. A processor device may be realized as a microprocessor, a controller, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration. In the depicted embodiment, the processor 104 includes on-board RAM (random access memory) 103, and on-board ROM (read-only memory) 105. The program instructions that control the processor 104 may be stored in either or both the RAM 103 and the ROM 105. For example, the operating system software may be stored in the ROM 105, whereas various operating mode software routines and various operational parameters may be stored in the RAM 103. The software executing the exemplary embodiment is stored in either the ROM 105 or the RAM 103. It will be appreciated that this is merely exemplary of one scheme for storing operating system software and software routines, and that various other storage schemes may be implemented.

The memory 103, 105 may be realized as RAM memory, flash memory, EPROM memory, EEPROM memory, registers, a hard disk, a removable disk, a CD-ROM, or any other form of storage medium known in the art. In this regard, the memory 103, 105 can be coupled to the processor 104 such that the processor 104 can read information from, and write information to, the memory 103, 105. In the alternative, the memory 103, 105 may be integral to the processor 104. As an example, the processor 104 and the memory 103, 105 may reside in an application specific integrated circuit (ASIC). In practice, a functional or logical module/component of the display system 100 might be realized using program code that is maintained in the memory 103, 105. For example, the memory 103, 105 can be used to store data utilized to support the operation of the display system 100, as will become apparent from the following description.

No matter how the processor 104 is specifically implemented, it is in operable communication with the terrain databases 106, the navigation databases 108, and the display devices 116, and is coupled to receive various types of inertial data from the sensors 112, and various other avionics-related data from the external data sources 114. The processor 104 is configured, in response to the inertial data and the avionics-related data, to selectively retrieve terrain data from one or more of the terrain databases 106 and navigation data from one or more of the navigation databases 108, and to supply appropriate display commands to the display devices 116. The display devices 116, in response to the display commands, selectively render various types of textual, graphic, and/or iconic information.

The terrain databases 106 include various types of data representative of the terrain over which the aircraft is flying, and the navigation databases 108 include various types of navigation-related data. The sensors 112 may be implemented using various types of inertial sensors, systems, and or subsystems, now known or developed in the future, for supplying various types of inertial data, for example, representative of the state of the aircraft including aircraft speed, heading, altitude, and attitude. The ILS 118 provides aircraft with horizontal (or localizer) and vertical (or glide slope) guidance just before and during landing and, at certain fixed points, indicates the distance to the reference point of landing on a particular runway. The GPS receiver 124 is a multi-channel receiver, with each channel tuned to receive one or more of the GPS broadcast signals transmitted by the constellation of GPS satellites (not illustrated) orbiting the earth.

The display devices 116, as noted above, in response to display commands supplied from the processor 104, selectively render various textual, graphic, and/or iconic information, and thereby supplies visual feedback to the user 109. It will be appreciated that the display device 116 may be implemented using any one of numerous known display devices suitable for rendering textual, graphic, and/or iconic information in a format viewable by the user 109. Non-limiting examples of such display devices include various cathode ray tube (CRT) displays, and various flat screen displays such as various types of LCD (liquid crystal display) and TFT (thin film transistor) displays. The display devices 116 may additionally be implemented as a screen mounted display, or any one of numerous known technologies. It is additionally noted that the display devices 116 may be configured as any one of numerous types of aircraft flight deck displays. For example, it may be configured as a multi-function display, a horizontal situation indicator, or a vertical situation indicator, just to name a few. In the depicted embodiment, however, one of the display devices 116 is configured as a primary flight display (PFD).

In operation, the display device 116 is also configured to process the current flight status data for the host aircraft. In this regard, the sources of flight status data generate, measure, and/or provide different types of data related to the operational status of the host aircraft, the environment in which the host aircraft is operating, flight parameters, and the like. In practice, the sources of flight status data may be realized using line replaceable units (LRUs), transducers, accelerometers, instruments, sensors, and other well known devices. The data provided by the sources of flight status data may include, without limitation: airspeed data; groundspeed data; altitude data; attitude data, including pitch data and roll data; yaw data; geographic position data, such as GPS data; time/date information; heading information; weather information; flight path data; track data; radar altitude data; geometric altitude data; wind speed data; wind direction data; etc. The display device 116 is suitably designed to process data obtained from the sources of flight status data in the manner described in more detail herein.

There are many types of touch screen sensing technologies, including capacitive, resistive, infrared, surface acoustic wave, and embedded optical. All of these technologies sense touch on a screen. A touch screen is disclosed having a plurality of buttons, each configured to display one or more symbols. A button as used herein is a defined visible location on the touch screen that encompasses the symbol(s). Symbols as used herein are defined to include alphanumeric characters (referred to herein as a label), icons, signs, words, terms, and phrases, either alone or in combination. A particular symbol is selected by sensing the application (touch) of a digit, such as a finger or a stylus, to a touch-sensitive object associated with that symbol. A touch-sensitive object as used herein is a touch-sensitive location that includes a button and may extend around the button. Each button including a symbol has a touch-sensing object associated therewith for sensing the application of the digit or digits.

The flight deck controller includes a gaze tracking controller 132, an emitter 134, and a sensor 136. The emitter 134 may, for example, be positioned on the head of the user for emitting a signal that is sensed by one or more sensors 136 positioned near the touch screen. The gaze tracking controller 132, in response to the sensed signal, communicates with the touch screen 102 to identify a portion of the touch screen being viewed. In other embodiments, it may not be necessary for a user to wear a device on the user's head.

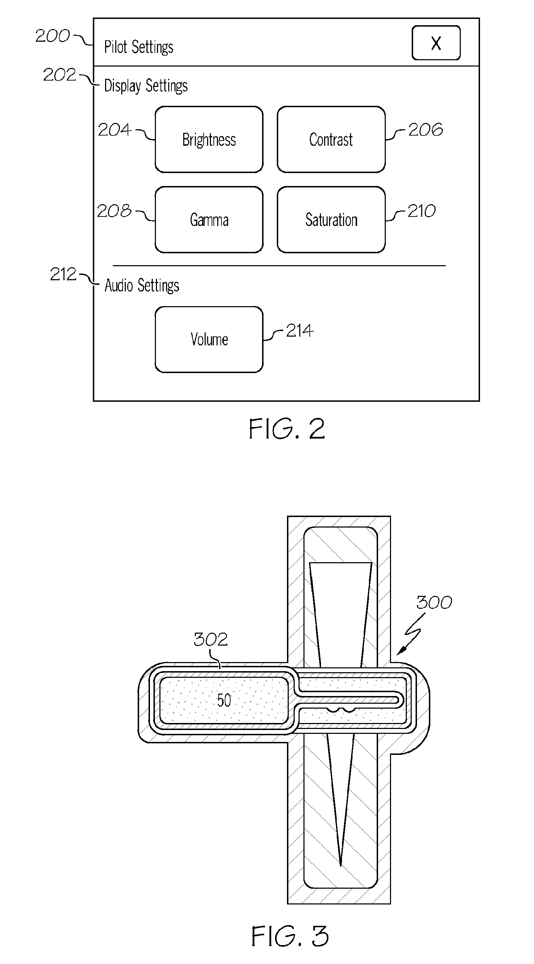

As alluded to previously, embodiments described herein relate to a slider control system and method that reduces effort and occupies less real estate on, for example, a touch screen controller display. As also previously described, current touch screen controllers require three distinct actions to change the value of a metric controlled by a slider control. For example, FIG. 2 illustrates a Pilot Settings page of the type that might appear on a display (e.g. a touch screen controller display or cursor controlled display) for controlling Display Settings 202 including a Brightness button 204, a Contrast button 206, a Gamma button 208, and a Saturation button 210; and for controlling Audio Settings 212 having a Volume button 214. If, for example, the brightness were to be changed from a value fifty to seventy in accordance with known techniques, an operator would first click on the Brightness button 204 to invoke a brightness slider control 300 shown in FIG. 3. Next, by clicking on slider control 302, the operator can drag the slider control 302 upward (i.e. toward the plus sign) to increase the brightness or downward (i.e. toward the minus sign) to decrease the brightness. In the instant case, the operator would drag the slider upward from fifty to seventy. A subsequent click on the slider 302 closes the slider control 300 and completes the action. Clearly this process requires a significant amount of effort, which is disadvantageous for the reasons given above.

Embodiments described herein contemplate a novel slider control and method for using same that reduces the number of clicks for achieving a desired result while at the same time saving space on the display. These embodiments contemplate a slider control device and method that achieves desired results; (e.g. adjusting brightness) with just one click instead of the traditional three.

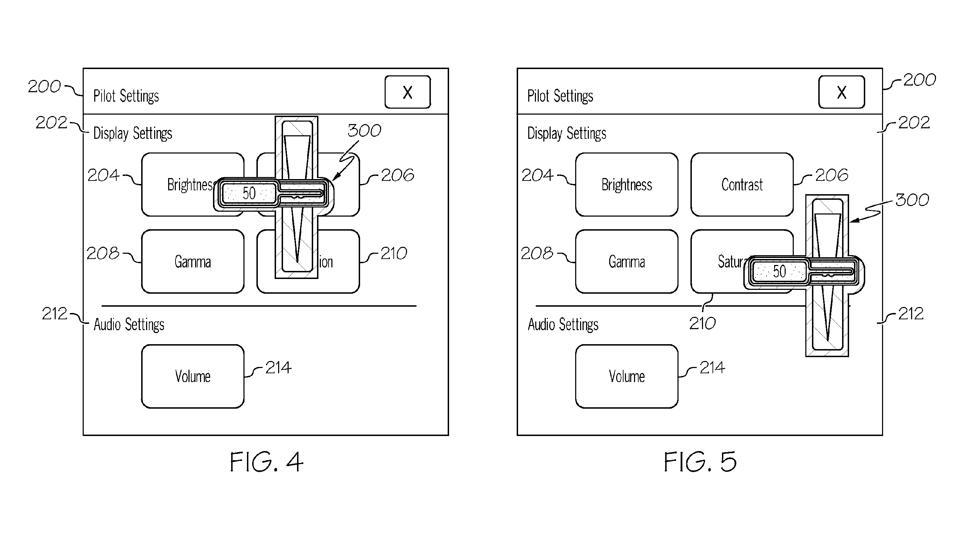

Referring to FIG. 4, an exemplary embodiment will be described that provides slider control with just one click instead of the traditional three. Once again, varying "Brightness" will be used as an example. "Brightness" button 204 is selected with a touch or cursor control device causing slider control 300 to appear on the display 200 as was the case previously described in connection with FIG. 3. However, in accordance with an embodiment, this also causes the remainder of the Pilot Settings window 200 to fade as is shown in FIG. 4, thus visually emphasizing slider control 300. With the touch or cursor already engaging on the Brightness button, the finger (or stylus) or cursor is moved up or down (left or right in the case of a lateral slider control) to alter the brightness value. When the desired brightness value has been achieved, the touch or cursor selection is discontinued closing the slider control view, and the Pilot's Settings window 200 is restored to full brightness automatically. This process may be used for all pilot settings. For example, FIG. 5 illustrates how the Saturation 210 may be selected and varied using the same technique. In fact, the described technique can be utilized on any display that includes slider control.

On current touch screen systems, a pilot may navigate to a Map Format page 600 that includes Window Setting buttons; i.e. Map Range button 602 and Map Format button 604; and Map Control buttons; e.g. a Map Objects button 606, a VSD (Vertical Situation Display) 608, a Waypoint List 610, Secondary FPLN (flight plan) button 612, Search button 614, and a Charts Window button 616. In accordance with known techniques, when a pilot clicks on the MAP Range button 602, for example, Range Display page 700 appears containing a plurality of range buttons 702 corresponding to discrete ranges. If, for example, the pilot wishes to select a range of 250 nautical miles (NM), the pilot would click on button 704 (250 NM). The pilot then clicks on close button (X) 710 to close the dialog box. This method is tedious and requiring a great deal of display space and an entirely new dialog box because only one new range may be selected at a time. Thus, the MAP Range page must display a large number of discrete ranges consuming a great deal of space.

In accordance with an embodiment, when a finger, stylus, cursor control, or the like selects Map Range button 602, a range control slider is automatically generated, and the rest of the Map Format 600 fades out causing attention to be primarily directed to slider control 800 as shown in FIG. 8. The pilot may adjust the range up or down by simply dragging the slider control up or down (or laterally if the slide controller is horizontal) to increase or decrease the range. Dragging may be performed by touching and sliding across a touch screen or moving a cursor in the case of a cursor controlled display. When the desired range is reached, the pilot simply deselects by discontinuing touch or cursor selection to complete the operation, and the Map Format page 600 is restored to full brightness.

FIG 9 is a flow chart 900 representative of a process for varying a parameter alterable by "manipulation" of a control button on a touch screen display or cursor controlled display. The "manipulation" is comprised of a "PRESS", a "SLIDE", and a "RELEASE". In the case of a touch screen display, the PRESS comprises touching the parameter control button, the SLIDE comprises dragging the slide control to alter its position and thus adjust the parameter while remaining in contact with the touch screen, and the RELEASE comprises terminating with the touch screen. In the case of a cursor control device, the PRESS corresponds to pressing of a cursor control button to select the parameter control button, the SLIDE corresponds to dragging the slide control to adjust the parameter, and the release corresponds to releasing the cursor control button.

Referring to FIG. 9, when a decision has been made to vary a parameter (P) controlled by a control button on a display (STEP 902), the control button is pressed. This results in the fading of display background (STEP 906) and the appearance of a slide control in the region of the faded control button (STEP 908). If for some reason, the control button is now disengaged (STEP 910), the display is restored (STEP 912) to its state prior to button engagement.

If the control button has not been disengaged (STEP 910), the slide may be dragged (STEP 914) until the parameter (P) reaches a desired value (STEP 916). The button may then be released (STEP 918), the display restored (STEP 912) and the process ended (STEP 920).

Thus, there has been provided a novel system and method for varying a parameter graphically represented by a first control button on a display. The first control button is pressed either by contacting a touch screen or via a cursor control. Symbology is then generated on the display graphically representative of a slide control, which is dragged to vary the parameter to a desired value. Contact with the display, either by means of touch or cursor control, as the case may be, is then terminated.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for varying a parameter graphically represented by a first control button on a display, the method comprising:
pressing the display proximate the first button;
generating symbology on the display graphically representative of a slide control;
dragging the slide control to vary the parameter to a desired value; and
releasing the slide control.

2. The method of Claim 1 further comprising:
generating symbology on the display graphically representative of a plurality of control buttons including the first control button; and
fading the remainder of the display when the slide control is displayed.

3. The method of Claim 2 wherein the slide control is displayed at the location of the first button.

4. The method of Claim 1 wherein the display is a touch screen display and wherein the step of pressing comprises contacting a touch screen and the step of releasing comprises discontinuing contact with the touch screen.

5. The method of Claim 1 wherein the steps of pressing and releasing comprise selecting and unselecting the control button with a cursor control device.

6. The method of Claim 3 further comprising generating symbology graphically representative slide control movement.

7. The method of Claim 6 wherein the display is an avionics display.

8. The method of Claim 7 further comprising displaying a plurality of flight parameter buttons.

9. The method of Claim 8 wherein the flight parameter includes pilot settings.

10. An aircraft display system configured to display a slide control for enabling the adjustment of at least one parameter, comprising:
a display system;
a user input device coupled to the display system; and
a processor coupled to the display system and to the input device and configured to (1) display at least one control button, (2) generate symbology for the graphical display of a slide control when the control button is engaged, (3) monitor and display movement of the slide control made by means of the user input device; and (4) terminate display of the slide control when a desired value of the parameter has been reached.
